# FASCICULE DE BREVET EUROPEEN

(11) **EP 1 376 513 B1**
(45) Date de publication et mention de la délivrance du brevet: **22.03.2006**
(21) Numéro de dépôt: 03291455.8
(22) Date de dépôt: 17.06.2003
(51) Int. Cl.: G08G 1/16

(54) **Dispositif de sécurité pour véhicule**
Sicherheitsgerät für Fahrzeug
Safety device for vehicle

(30) Priorité: 18.06.2002 FR 0207587
(43) Date de publication de la demande: 02.01.2004
(73) Titulaire: Tecknisolar-Seni S.A.R.L., 35403 Saint-Malo Cedex (FR)
(72) Inventeur: Barguirdjian, Pascal, 35400 Saint-Malo (FR)
(74) Mandataire: Maillet, Alain

(56) Documents cités:
- WO-A-98/19281
- DE-A- 19 522 445
- DE-A- 19 816 004

## Description

La présente invention concerne un dispositif de sécurité, notamment pour véhicule destiné à circuler entre des bandes de marquage d'une chaussée. Un tel véhicule peut être toute sorte de véhicule de transport.

Comme cela sera compréhensible dans la suite de la description, selon un mode de réalisation particulier, un tel dispositif de sécurité est multifonctions et est alors destiné à améliorer la sécurité des conducteurs et des automobiles sur les voies de circulation ouvertes au public par l'intermédiaire d'un dispositif de trajectoire électronique de guidage, de détection automatique d'allumage des codes, de détection automatique de température au sol, de la protection du véhicule à l'arrêt, placé sur le véhicule détectant automatiquement tous signes de fatigue d'hypovigilance, de somnolence, d'endormissement et de distraction et aura la particularité d'alerter automatiquement le conducteur automobile, en état de perte d'attention, de toute dérive et écart intempestifs de son véhicule et ceci grâce au marquage au sol, d'allumer automatiquement les feux de croisement ou lanternes dès que l'obscurité ou un manque de visibilité apparaît, de détecter automatiquement la température du sol pour ralentir par exemple l'hiver en cas de basse température pour ne pas glisser sur le verglas, et de protéger son véhicule à l'arrêt sur une place de parking pour éviter qu'il soit volé.

Actuellement, on peut effectivement penser que les conducteurs estiment possible de dépasser les limites de leurs forces et de leur fatigue au-delà du raisonnable. Du reste, tous les jours sur nos routes, des véhicules effectuent généralement des parcours parfois trop longs, entraînant des accidents corporels voire mortels en raison d'une baisse de la vigilance et d'inattention de leur conducteur.

Malgré les efforts importants consacrés à l'amélioration et à la qualité des autoroutes et routes nationales qui sont devenues au fil des années, plus larges, rectilignes et sures, avec des revêtements et marquages au sol plus visibles et sécurisants, et, également, grâce à la technologie et le confort des véhicules, les accidents de la circulation routière augmentent et notamment en raison de l'endormissement au volant, de la perte de contrôle du véhicule dérapant sur une plaque de verglas, etc. Certains conducteurs oublient aussi d'allumer les feux de croisement lorsqu'ils pénètrent dans un tunnel de jour, ou tout simplement la nuit, et dans des conditions climatiques difficiles du fait du manque de visibilité dû à la pluie, au brouillard, etc. Les professionnels de la route notamment les routiers, rencontrent ce type de problème d'hypovigilance, de distraction, et d'inattention dus en partie à la monotonie du parcours, et de cette nouvelle tendance, de téléphoner en conduisant avec un portable, au confort du siège de leur camion, l'habitude du trajet, et un fond sonore monotone. Les clignotants sont de plus en plus souvent oubliés et deviennent également une cause d'accident non négligeable.

Ces accidents dus à la fatigue ou à la distraction sont pour la plupart d'entre eux mortels et entraînent malheureusement parfois la vie d'autrui. Les secours ainsi que l'administration sont actuellement dans une impasse et le coût financier de ces accidents mortels est considérable chaque année en Europe, sans parler des vols de véhicules sur place de parking enlevés soit par des faux dépanneurs équipés de camions grue soit en fracturant et en connectant la clef de contact du véhicule par l'intermédiaire de fils.

C'est pourquoi actuellement, les constructeurs automobiles ainsi que les chercheurs essaient de trouver des solutions intéressantes sur le comportement du conducteur automobile, distrait et fatigué la plupart du temps, en utilisant par exemple différents systèmes complexes de surveillance de la trajectoire ou du comportement de son véhicule, tels que caméra numérique, caméra analogique, capuchon émetteur-récepteur à réflexion infra rouge électromagnétique, capteur optoélectronique, télémètre de cartographie, caméra vidéo CCD ou autre, placés sur le tableau de bord ou à l'avant de la voiture et qui font retentir une alarme sonore ou lumineuse dès que, selon les systèmes, les paupières du conducteur sont fermées pendant plus de deux secondes voire plus, que la trajectoire du véhicule devient incorrecte du fait de la détection des lignes continues ou discontinues de la chaussée, ou que des capteurs photodiodes ou photo-résistances placés sur le pare-brise détectent la baisse de luminosité et allument automatiquement les feux de croisement.

Plusieurs inconvénients des systèmes de l'art antérieur existent : en effet, l'installation reste importante et le système n'est pas si fiable lors de temps pluvieux (encrassement des caméras, des capteurs, des télémètres, le câblage de tous les capteurs, l'électronique de chaque capteur et de chaque fonction, etc.), les émotions des conducteurs ne sont pas contrôlées et certains conducteurs s'endorment les yeux ouverts ce qui fait que la caméra ne détecte aucune anomalie avant la perte de contrôle du véhicule, certains capteurs optoélectroniques ont du mal à différencier en plein soleil, sur une chaussée grise, les lignes blanches continues ou discontinues vieillissantes. De nombreux déclenchements intempestifs peuvent survenir lorsque la chaussée est recouverte de particules de givre et de la même couleur que les lignes blanches continues ou discontinues. Certains dispositifs ne savent pas correctement fonctionner suivant différentes hauteurs de véhicules par rapport à la chaussée (différence d'empattement entre voiture et camion). Quant aux capteurs optoélectroniques basés sur la technologie photodiode ou photo-résistance par faisceau de lumière reçue sur le pare-brise, des déclenchements intempestifs interviennent dus à l'encrassement naturel du pare-brise. De plus, cette technologie de détection de lumière est totalement indépendante de la dérive. Il faut savoir que le coût de ces produits reste extrêmement élevé.

Ce coût est également élevé en raison du câblage de chaque équipement.

De plus, dès lors que d'autres fonctions sont souhaitées, elles sont mises en oeuvre séparément, alourdissant ainsi le budget consacré à la sécurité, mais apportant d'autres problèmes techniques. Ainsi, des systèmes d'alarme anti-soulèvement existent bien mais sont basés sur des masselottes vibratoires ou bille. En effet, dès que le véhicule est bougé, le système se met en marche. Le problème qui se pose alors est celui des déclenchements intempestifs intervenant lors par exemple de tempêtes de vent. De même, lorsque l'usager roule avec son véhicule équipé de capteurs de température extérieure, l'inconvénient est que la température mesurée à l'extérieur est une température ambiante, ce qui n'est pas du tout la même chose que la température de la chaussée. De plus, certains véhicules n'en sont toujours pas équipés.

Le but de la présente invention est donc de proposer un dispositif de sécurité qui ne présente pas les inconvénients des dispositifs de l'art antérieur tout en apportant des fonctions supplémentaires.

A cet effet, la présente invention concerne un dispositif de sécurité pour véhicule tel que divulgué par le document WO-A-9819281 notamment pour véhicule destiné à circuler entre des bandes de marquage d'une chaussée, ledit dispositif étant pourvu de capteurs montés de chaque côté dudit véhicule et reliés à une unité de traitement pourvue d'un système d'alarme, ladite unité de traitement commandant ledit système d'alarme lorsque l'un des capteurs reçoit de la lumière réfléchie sur une desdites bandes de marquage de ladite chaussée. La présente invention est caractérisé en ce que chaque capteur est constitué d'une pluralité d'émetteurs émettant des lumières de longueurs d'onde différentes et d'au moins un récepteur de chacune des longueurs d'onde ainsi émises.

Chaque capteur est constitué d'un premier émetteur prévu pour émettre à une première longueur d'onde, par exemple de lumière infrarouge, et d'un second émetteur de lumière d'une seconde longueur d'onde différente de la première longueur d'onde, par exemple de lumière ultraviolette.

Selon une autre caractéristique de l'invention, les rayonnements émis par lesdits émetteurs sont modulés en amplitude à une fréquence prédéterminée, ladite unité de traitement comportant des moyens de filtrage délivrant des signaux filtrés représentatifs des quantités de lumière respectivement émises par lesdits émetteurs et réfléchies sur ladite chaussée.

Selon une autre caractéristique de l'invention, ladite unité de traitement comporte des moyens de filtrage délivrant des signaux représentatifs du rayonnement ambiant, lesdits signaux filtrés étant utilisés par ladite unité de traitement pour la commande dudit système d'alarme.

Selon une autre caractéristique de l'invention, ladite unité de traitement comporte des moyens de validation qui sont prévus pour délivrer un signal validé lorsque le signal issu du capteur correspond à un niveau compris entre un niveau minimal et un niveau maximal, lesdits deux niveaux étant délivrés par une table que comporte ladite unité de traitement et qui est adressée par au moins le signal délivré par l'autre capteur.

Selon une autre caractéristique de l'invention, ladite table est en outre adressée par un signal de niveau moyen délivré par des moyens sur la base des signaux délivrés par chacun desdits capteurs.

Selon une autre caractéristique de l'invention, ladite unité de traitement comporte des moyens de linéarisation pour linéariser la courbe de réponse desdits capteurs.

Selon une autre caractéristique de l'invention, ladite unité de traitement comporte un comparateur prévu pour commander ledit système d'alarme sur la base des signaux délivrés par lesdits capteurs, éventuellement filtrés, éventuellement validés et sur la base d'un signal de niveau moyen lui-même délivré par des moyens sur la base des signaux délivrés par chacun desdits capteurs.

Selon une autre caractéristique de l'invention, ladite unité de traitement comporte un comparateur qui reçoit sur une entrée un signal de niveau ambiant et sur une autre entrée un signal de référence et dont la sortie est reliée à une unité de commande des feux de croisement.

Selon une autre caractéristique de l'invention, il comporte des moyens de détection de salissure desdits capteurs.

Selon une autre caractéristique de l'invention, il comporte des moyens de neutralisation de son fonctionnement commandés par l'activation des clignotants dudit véhicule et/ou des freins.

Selon une autre caractéristique de l'invention, la liaison entre lesdits capteurs et ladite unité de traitement est une liaison sans fil, par exemple électromagnétique.

Selon une autre caractéristique de l'invention, il comporte des moyens de détection d'enlèvement mis en fonction lors de la fermeture du contact dudit véhicule et prévu pour commander le système d'alarme dudit véhicule lorsque la quantité de lumière émise par lesdits émetteurs, réfléchie au sol et reçue par lesdits capteurs change brusquement.

Selon une autre caractéristique de l'invention, ladite unité de traitement comporte des moyens pour détecter à partir d'un signal de niveau ambiant le niveau de lumière infra-rouge émise par ladite chaussée, pour en déduire la température de ladite chaussée, et pour avertir l'utilisateur d'un risque de verglas lorsque cette température est inférieure à un seuil prédéterminé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue en perspective d'une automobile roulant sur une chaussée à deux lignes et équipée d'un système anti-dérive selon la présente invention,
La Fig. 2 est un schéma synoptique d'un système anti-dérive selon la présente invention,
La Fig. 3 est un schéma synoptique d'un moyen de validation d'un système anti-dérive selon la présente invention,
La Fig. 4 est un schéma montrant le principe d'un moyen de détection de salissure qui peut équiper un système anti-dérive selon la présente invention, et
La Fig. 5 est un schéma d'un boîtier d'un système anti-dérive selon la présente invention.

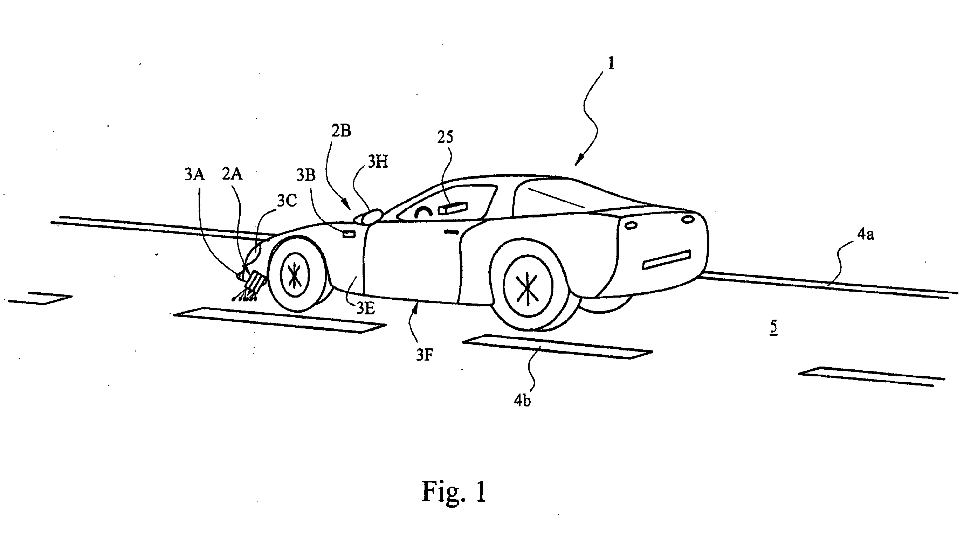

On a représenté à la Fig. 1 un véhicule 1 qui circule normalement sur une chaussée 5 pourvue d'une bande latérale 4a et d'une bande centrale 4b, par exemple comme c'est le cas ici, une bande centrale discontinue. Cette situation est un exemple où un véhicule circule entre deux bandes.

Le système anti-dérive selon la présente invention est essentiellement constitué de deux capteurs 2A et 2B fixés à l'avant ou à l'arrière du véhicule 1 de manière à se trouver l'un d'un côte du véhicule et l'autre de l'autre côté. Ils sont situés avantageusement sensiblement sur le même plan et sensiblement à la même hauteur. Ils sont dirigés vers la chaussée 5 en étant inclinés latéralement par rapport à la verticale.

Par exemple, ces deux capteurs 2A et 2B peuvent avoir la particularité d'épouser la forme ou d'être intégrés soit du ou dans le pare-choc 3A, soit des ou dans les clignotants 3B, ou des phares 3C feux de croisement, ou de la calandre ou des ailes 3E, ou des longerons, ou du châssis avant 3G, ou des rétroviseurs extérieurs 3H. Ils sont avantageusement étanches.

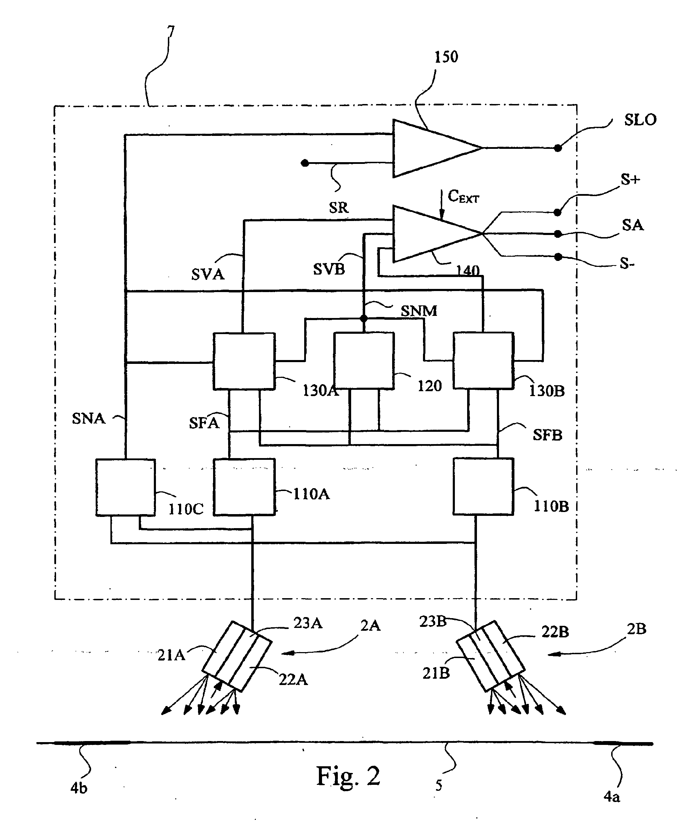

Chacun de ces deux capteurs 2A, 2B est essentiellement constitué voir plus en détail la Fig. 2, d'un émetteur 21A, 21B de lumière d'une première longueur d'onde, par exemple de lumière infrarouge, d'un second émetteur 22A, 22B de lumière d'une seconde longueur d'onde différente de la première longueur d'onde, par exemple de lumière ultraviolette et d'un récepteur 23A, 23B à réflexion colorimétrique fonctionnant dans l'ultra violet et l'infra rouge.

Les émetteurs 21A, 21B, 22A et 22B ont par exemple une puissance d'environ quelques dizaines de milliwatts.

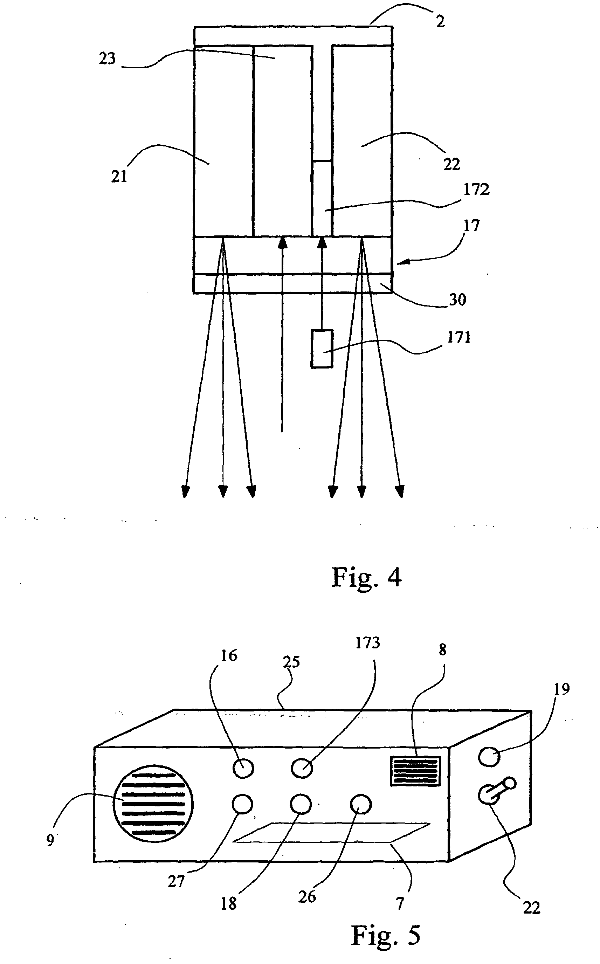

Le châssis des capteurs 2A 2B est en polyester, ou PVC, ou tout autre encapsulage assurant une étanchéité totale. La forme de ces capteurs 2A, 2B est plus particulièrement cylindrique de quelques centimètres de diamètre. Leur fixation peut être assurée au moyen de vis de fixation ou également par collage double-face afin de faciliter leur installation. La face avant des capteurs 2A 2B est constituée d'une vitre en verre 30 (voir Fig. 4) mais également peut être en polycarbonate et tout autre matériaux en plastique totalement étanche aux intempéries.

Le système anti-dérive selon la présente invention comprend encore un boîtier 25 (représenté plus en détail à la Fig. 5) qui est normalement monté dans l'habitacle du véhicule 1, par exemple sur ou dans son tableau de bord, et dans lequel sont enfermés l'unité 7 pour le traitement, avantageusement numérique et/ou numérique et analogique, des signaux délivrés par les capteurs 2A et 2B. Il renferme aussi des moyens d'alarme, tels qu'un buzzer 8, un voyant 18 pour alerter de la dérive, différents voyants 26, 27 pour notamment montrer la tendance de la dérive, d'autres voyants 16, 19, 173 et éventuellement un synthétiseur vocal 9. Il peut également comporter un bouton de marche/arrêt 22.

Les chaussées 5, notamment en Europe, sont de couleurs sombre, noire, grise, etc. Quant au marquage au sol, il est souvent d'une couleur blanche, mais on rencontre parfois des marquages de couleurs différentes, par exemple jaune clair ou autre lorsqu'ils sont entretenus. En effet, sur les chaussées 5, l'équipement de la route, lorsqu'il intervient pour réaliser le marquage au sol par l'intermédiaire de peinture ou de revêtement ajoute des mélanges de particules de billes de verre 11 dans la résine ou peinture pour permettre une meilleure visibilité de nuit de la ligne continue ou discontinue 4 lorsqu'elle est rajoutée sur la chaussée 5. Ce marquage est donc constitué d'une résine blanche armée et chargée d'un mélange de billes de verre. L'épaisseur de ce marquage par rapport à la chaussée peut varier entre 1 mm à 4 mm et permet une meilleure visibilité de nuit.

Le véhicule 1 circulant normalement sur la chaussée 5 entre les bandes peintes à l'instar de ce qui est montré à la Fig. 1, la couleur du revêtement étant homogène, il n'y aura pas ou peu de différence entre les niveaux de signaux respectivement délivrés par les capteurs 2A et 2B et la détection anti-dérive opérée par l'unité de traitement 7 contenue dans le boîtier 25 ne se fera pas, c'est-à-dire qu'aucune alarme sonore et/ou lumineuse ne sera actionnée dans l'habitacle du véhicule 1.

La dérive d'un véhicule, tel que le véhicule 1, est constituée par le franchissement involontaire d'une des deux bandes ou lignes latérales continues ou discontinues 4a, 4b, pendant lequel s'écoule un temps très largement suffisant pour réagir entre le début du franchissement effectif de la ligne et le point d'impact qui pourrait avoir lieu en fin de trajectoire. La trajectoire reste généralement rectiligne et le véhicule 1 dérive légèrement mais inexorablement d'un côté ou de l'autre de la chaussée 5.

A chaque fois que le véhicule 1 partira en dérive vers la gauche ou vers la droite de la chaussée 5, compte tenu de la permanence du marquage au sol, le véhicule 1 se rapprochera, voire franchira immanquablement une ligne ou bande continue ou discontinue 4a ou 4b et là, les niveaux de signaux respectivement délivrés par les capteurs 2A et 2B seront différents. La détection par l'unité de traitement 7 déclenchera une alarme sonore et/ou lumineuse dans l'habitacle du véhicule 1.

Une des caractéristiques de la présente invention déjà mentionnée ci-dessus est que chacun des deux capteurs 2A, 2B est constitué d'un émetteur 21A, 21B de lumière d'une première longueur d'onde, par exemple de lumière infrarouge, d'un second émetteur 22A, 22B de lumière d'une seconde longueur d'onde différente de la première longueur d'onde, par exemple de lumière ultraviolette. On a pu constater que cela rend le système plus fiable du fait notamment qu'il est moins sensible aux changements de revêtement de la chaussée 5 qui introduisent des perturbations pouvant affecter la lumière réfléchie par la chaussée 5. Un tel changement de revêtement peut être introduit par une flaque d'eau qui absorbe le rayonnement infrarouge et sur lequel il n'y a donc que peu de réflexion.

On a également pu constater que cet avantage est atteint si le nombre d'émetteurs émettant à des longueurs d'onde différentes était supérieur à deux.

On remarquera que plusieurs récepteurs peuvent être mis en oeuvre pour la réception de toutes les longueurs d'onde émises, mais qu'un seul pourrait également suffire dans la mesure où il reçoit toutes les longueurs d'onde émises.

On va maintenant décrire en relation avec la Fig. 2 le système d'anti-dérive selon l'invention. Il comprend l'unité de traitement 7 montée dans le boîtier 25 ainsi que les deux capteurs émetteurs/récepteur 2A et 2B qui sont montés de chaque côté de la voiture équipée du système de la présente invention. On voit que chaque capteur émetteurs/récepteur 2A, 2B est en réalité composé d'un émetteur 21A, 21B émettant à une première longueur d'onde, par exemple une longueur d'onde infrarouge, d'une second émetteur 22A, 22B émettant à une seconde longueur d'onde, par exemple une longueur d'onde ultraviolette, et d'un récepteur 23A, 23B prévu pour recevoir les rayons infrarouges et ultraviolets réfléchis sur la chaussée 5 mais également le rayonnement environnant.

Les rayonnements émis par les émetteurs 21A, 21B, 22A et 22B sont modulés en amplitude à une fréquence f0 prédéterminée qui, dans un mode de réalisation, est de l'ordre de quelques dizaines de kHz.

Les signaux électriques délivrés par les récepteurs 23A et 23B sont respectivement fournis à des premier et second moyens de filtrage 110A et 110B passe-bande dont la fréquence centrale correspond à la fréquence f0 de modulation des émetteurs 21A, 21B, 22A et 22B. Ainsi, les signaux SFA et SFB issus de ce filtrage ne sont représentatifs que de la quantité de lumière émise par les émetteurs 21A, 21B, 22A et 22B et réfléchie sur la chaussée 5 et ne comportent pas la composante continue liée au rayonnement ambiant.

Des moyens 120 sont prévus pour la détermination d'un niveau moyen de lumière réfléchie sur la base des signaux SFA et SFB présents à ses entrées. Ils délivrent un signal de niveau moyen SNM.

Les signaux électriques délivrés par les récepteurs 23A et 23B sont également fournis à des troisièmes moyens de filtrage 110C, passe-bas dont la fréquence de coupure est très inférieure à la fréquence f0 de manière que les signaux SNA que ces moyens 110C délivrent soient représentatifs de la composante continue de lumière, en l'occurrence le rayonnement ambiant.

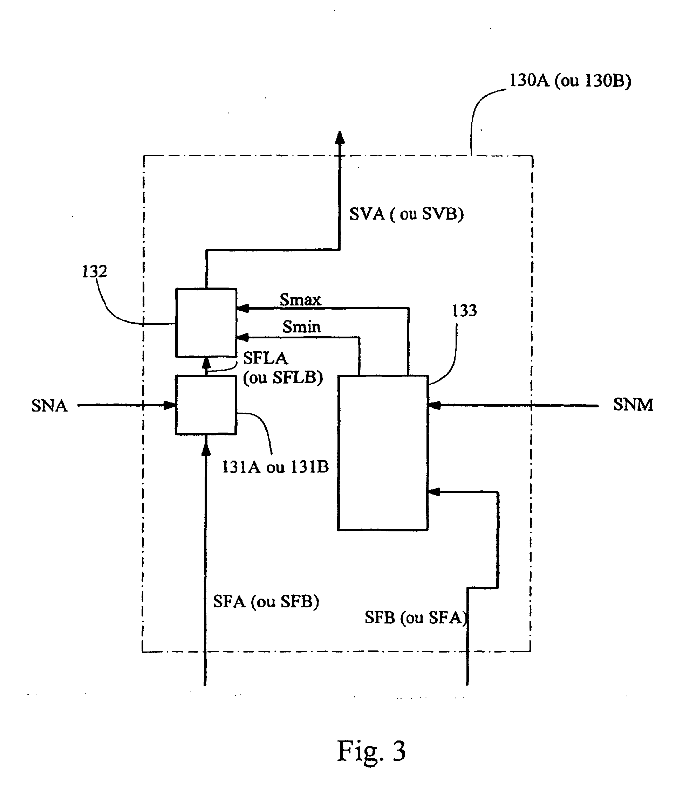

Des moyens de validation 130A et 130B sont prévus pour déterminer des signaux validés SVA et SVB sur la base des signaux filtrés SFA et SFB, du signal de niveau moyen SNM et du signal de niveau ambiant SNA. Ces moyens de validation 130A et 130B sont décrits ci-après en relation avec la Fig. 3.

Les signaux validés SVA et SVB ainsi que le signal de niveau moyen SNM sont délivrés à comparateur à trois niveaux 140 qui est prévu pour délivrer un signal d'alarme SA mais aussi des signaux de tendance S+ et S-.

Le signal d'alarme SA peut piloter un système d'alarme, tel qu'un buzzer 8, un voyant 18 ou même un synthétiseur vocal 9 avec des messages appropriés. Quant aux signaux de tendance, ils peuvent directement piloter des voyants 26 et 27 indiquant la direction de la dérive (voir Fig. 5).

Enfin, le signal de niveau ambiant SNA est fourni à une première entrée d'un comparateur 150 qui compare ce signal à un signal de référence SR présent sur une seconde entrée. Ce comparateur 150 délivre un signal de lumière/obscurité SLO qui, selon que le niveau du signal SNA est inférieur ou au contraire supérieur au niveau du signal de référence SR, est représentatif de l'obscurité ou de la lumière. Ce signal SLO peut alors être utilisé pour commander l'allumage des feux de croisement du véhicule 1 lorsque ce signal SLO est représentatif de l'obscurité.

On a représenté à la Fig. 3 des moyens de validation 130A ou 130B qui comprennent, dans le mode de réalisation représenté, des moyens de linéarisation 131 recevant, sur une première entrée, les signaux filtrés SFA (ou SFB) et dont le but est de corriger, en fonction des signaux de lumière ambiante SNA présents sur une seconde entrée, la courbe de réponse à la lumière du récepteur 23A (ou 23B) correspondant et d'ainsi de la linéariser. Par les moyens 131A et 131B, les capteurs 2A et 2B auront un contrôle automatique de gain réflexion colorimétrique.

On notera que ces moyens de linéarisation 131A ou 131B sont optionnels bien qu'apportant un avantage certain.

Le signal filtré et linéarisé SFLA (ou SFLB) est fourni à une première entrée de moyens de prise en compte 132.

Le signal filtré SFB (ou SFA) issu du capteur du côté opposé est fourni à une première entrée d'adressage d'une table 133 dont la seconde entrée reçoit le signal de niveau moyen SNM. Pour chaque couple de valeurs des signaux filtrés SFB (ou SFA) et de niveau moyen SNM, la table 133 stocke et délivre deux valeurs Smin et Smax correspondant respectivement à la valeur minimale et la valeur maximale que peut prendre le signal filtré SFA (ou SFB). Dans un exemple de réalisation de l'invention, ces deux valeurs Smin et Smax ont été obtenues empiriquement, puis mémorisées dans une mémoire qui forme la table 133.

Ainsi, en fonction des conditions de lumière réfléchie données déterminées par le niveau du signal SNM et du niveau de signal filtré SFB (ou SFA) sur un capteur 2B (ou 2A), le niveau du signal filtré SFA (ou SFB) sur l'autre capteur 2A (ou 2B) doit se trouver entre les deux valeurs Smin et Smax délivrées par la table 133 pour être validé. Si cela n'était pas le cas, cela signifierait un dysfonctionnement du système et le signal filtré SFA ou SFB n'est pas pris en compte.

Les moyens de prise en compte 132 sont prévus pour prendre en compte les signaux filtrés et éventuellement linéarisés SFLA (ou SFLB) lorsque leur niveau est compris entre les deux valeurs Smin et Smax délivrées par la table 133 et ne pas les prendre en compte dans le cas contraire.

Grâce aux moyens de validation 130A et 130B, on peut éviter tout déclenchement intempestif dû aux ombres créées par le soleil et par une pluie intense qui peuvent porter confusion à une réflexion et à un contraste de couleurs. En effet, à ce moment là, les signaux délivrés par l'un et/ou l'autre capteurs 2A, 2B ne seront pas pris en compte automatiquement.

Avec un tel système, dès que l'un des capteurs 2A 2B rencontrera une ligne ou bande latérale discontinue ou continue 4a, 4b de couleur blanche ou autre, la réflexion et le contraste seront modifiés même si le marquage est vieillissant. A ce moment là, grâce aux traitements des signaux en numérique de l'unité de traitement 7, ce dispositif anti-dérive de l'invention aura pour but de contrôler, par évaluation du contraste paramétrée au moyen de la table 133 de l'unité 7, la variante de la colorimétrie de la couleur blanche et jaune déjà programmée qui se situe à X : 0,5 à 0,2 et Y : 0,5 à 0,3 et, par réflexion réfléchissante des lignes blanches et jaunes. Tout ceci est préalablement programmé, notamment dans la table 133, pour référence et pour comparaison de ce qui se trouve sur la chaussée 5 par rapport à ce qui se trouve dans la table 133 de l'unité de traitement 7 du dispositif anti-dérive en tenant compte de la tolérance +/-30 % à cause de la salissure, du vieillissement des bandes ou lignes continues ou discontinues 4, et autres causes de perturbations du signal utile. Par conséquent, toute couleur rencontrée dans cette programmation de colorimétrie de l'unité de traitement 7 par l'intermédiaire des capteurs 2A et 2B et toute modification de la variation de lumière du jour et de la réception ultra-violet/infra-rouge par l'intermédiaire des capteurs 2A et 2B feront retentir, en temps réel, des alarmes visuelles et/ou sonores sous forme de voyants lumineux 18, 26 et 27 et d'alarmes sonores buzzer 8 éventuellement associés à une synthèse vocale 9.

Cette détection se fait en quelques micro secondes ce qui permet d'être immédiatement alerté, en temps réel, de l'écart fait par le véhicule 1 soit de la gauche vers la droite, soit de la droite vers la gauche. L'allumage automatique des phares 3C (feux de croisement) en un seul et même dispositif peut également être prévu.

En variante de réalisation, un dispositif anti-dérive 25 selon l'invention peut comporter des moyens qui neutralisent son fonctionnement automatiquement pendant quelques secondes, par exemple de l'ordre de 10 secondes, lorsque le conducteur actionne son clignotant gauche ou droite ou sa pédale de frein 10. En effet, il s'agit de manoeuvres prouvant l'éveil du conducteur et pouvant entraîner un franchissement de bandes ou lignes continues ou discontinues 4a, 4b. Ces moyens permettront au système anti-dérive de l'invention d'être intelligent sans qu'il y ait de déclenchement intempestif.

Par exemple, ces moyens peuvent être inclus dans le comparateur 140 alors pourvu d'une entrée de commande pour un signal de commande externe Cext délivré lors de la commande des clignotants et/ou de la pédale de frein. Ainsi, grâce à l'unité de traitement 7 du dispositif anti-dérive de l'invention, le contrôle d'information automatique de la commande du clignotant gauche ou du clignotant droit et/ou de la commande de la pédale de frein 10 mettra hors service, pour quelques instants, les alarmes sonores et lumineuses grâce à la connexion du relais ou contact de l'alimentation des clignotants d'origine du véhicule 1 ainsi que l'alimentation des freins stop lumineux d'origine du véhicule 1.

On notera que la détection jour/obscurité pour l'allumage des feux de croisement 3C sera toujours en fonctionnement même si le clignotant ou la pédale de frein sont actionnés.

La liaison entre les capteurs 2A et 2B peut être assurée par l'intermédiaire d'un câble 20 ou par une liaison sans fil, telle qu'une liaison électromagnétique, par exemple infrarouge, radio-fréquence. Dans ce dernier cas, les capteurs 2A et 2B envoient les signaux qu'ils délivrent par émission, sous forme de rayonnement électromagnétique, à des récepteurs que comporte l'unité de traitement 7 dans le boîtier 25 placé sur ou dans le tableau de bord 6 du véhicule 1 et ceci sans câble 20 afin de faciliter l'installation et de permettre à un dispositif anti-dérive selon un mode de réalisation de l'invention d'être adapté ou adaptable rapidement sur un véhicule 1 non équipé par ce système (véhicule de location par exemple).

On notera que pour pouvoir installer le dispositif anti-dérive selon l'invention sur n'importe quel véhicule 1 ou support, chaque capteur 2A 2B est constitué d'une série de capteurs qui peuvent se valider ou s'annuler l'un par rapport à l'autre s'ils ne sont pas compétents et ce pour éviter des déclenchements intempestifs et ce grâce notamment au moyen de prise en compte 132.

Les paramètres entrés dans la table 133 de l'unité de traitement 7 du dispositif anti-dérive 25 peuvent être différents d'un véhicule à un autre, par exemple pour un camion et une voiture de course dont les empattements par rapport au sol sont assez différents. Cela permet la validation des signaux délivrés par les capteurs 2A et 2B quelque soit la vitesse, que ce soit de jour comme de nuit, sur sol mouillé ou sur sol sec. Ils peuvent également différer selon l'endroit où ils sont positionnés sur le véhicule 1, que ce soit sur le pare-chocs 3A, dans les clignotants 3B, dans les phares 3C ou feux de croisement, sur la calandre, sur les ailes 3E, sur les longerons ou le châssis 3G.

En cas de chutes de neige intenses sur la chaussée 5, la ligne ou la bande continue ou discontinue 4a, 4b ne pourra pas être détectée en raison du dépôt de neige.

Les deux capteurs 2A et 2B analyseront, en même temps, ce dépôt de neige. Par conséquent, il n'y aura pas de détection puisque les capteurs 2A 2B verront du blanc en même temps et au même moment. Le dispositif anti-dérive 25, et en particulier le comparateur 140, déclenchera néanmoins des alarmes du fait que le niveau moyen SNM sera alors relativement élevé. Ce déclenchement sera fait par l'intermédiaire d'une synthèse vocale 9 "système hors service" associé à un voyant lumineux de couleur blanche 16 (voir Fig. 5) et un buzzer d'alarme 8.

Après l'utilisation de ce système pendant quelques semaines, il peut arriver que les capteurs 2A et 2B placés à l'extérieur du véhicule 1 et, notamment l'hiver, se salissent très rapidement. C'est pourquoi le dispositif anti-dérive selon une variante de réalisation de la présente invention est muni d'une unité de détection automatique de salissure 17 des capteurs 2A et 2B sans compromettre la crédibilité de la détection anti-dérive et la détection jour/nuit basse lumière. En effet, afin de rendre le système sûr et crédible lors de son utilisation - manuelle ou automatique - avant chaque départ, le système anti-dérive 25 de véhicule sera équipé d'un système de détection de salissure, pour la simple raison que peut éventuellement se trouver collé ou posé sur un des capteurs 2A 2B une feuille morte, un sac plastique ou une motte de terre.

Ce système de détection de salissure 17, dans un mode de réalisation particulier représenté à la Fig. 4, est constitué, d'une part, d'une source de lumière 171, par exemple une photodiode émettant dans le rouge ou une autre couleur, qui est placée à l'extérieur des capteurs 2A et 2B et dirigée vers la face frontale 30 de ces capteurs 2A et 2B et, d'autre part, d'un détecteur de lumière 172, par exemple une photo-résistance, intégré et placé dans chaque capteur 2A, 2B. On comprendra que lorsque la face avant 30 des capteurs 2A et 2B est encrassée, la lumière émise par la source de lumière 171 ne parvient pas au détecteur 172 à l'intérieur de chaque capteur 2A, 2B. Ce détecteur envoie alors un signal à l'unité de traitement 7, en particulier au comparateur 140, qui déclenchera alors une alarme automatiquement pour y annoncer, par exemple aux moyens d'un voyant lumineux approprié 171, du buzzer 8 ou par une éventuelle synthèse vocale 9, que tel ou tel capteur 2A, 2B est à nettoyer.

De manière générale, il est possible de prévoir un voyant lumineux 18, par exemple de couleur bleue qui, lorsque le système fonctionne correctement, s'allumera sur le boîtier de contrôle 25 placé sur ou dans le tableau de bord 6. Il pourrait également être prévu une alarme sonore 8 et une synthèse vocale 9 indiquant "système opérationnel".

La mise en marche d'un dispositif anti-dérive 25 selon l'invention se fait par l'intermédiaire d'un interrupteur marche/arrêt 22 placé sur le boîtier de contrôle et d'information 25 du tableau de bord 6 du véhicule 1, ou par la clé de contact du véhicule par exemple. A cet instant précis, un voyant lumineux 19, par exemple de couleur bleue (voir Fig. 5), s'allume et signale que le système est totalement opérationnel.

L'alimentation électrique d'un dispositif anti-dérive selon la présente invention peut se faire à l'aide de la batterie du véhicule 1, à l'aide de piles interchangeables 14 ce qui permet au dispositif anti-dérive d'être totalement autonome du circuit électrique du véhicule 1 et de sa batterie ou à l'aide de toute autre forme d'énergie autre que celle du véhicule 1, telle que l'énergie solaire, l'énergie vibratoire, l'énergie fournie par une pile à combustible, etc.

Au franchissement d'une bande ou ligne continue ou discontinue 4 peinte, l'un des capteurs 2A, 2B lit un contraste de couleur généralement blanc par rapport à la couleur du revêtement toujours lu par l'autre capteur 2A 2B. La détection de contraste et/ou de réflexion étant avérée au moyen de l'unité de traitement 7 comme déjà expliqué ci-dessus, une alarme se déclenche instantanément sur le boîtier de contrôle et d'information 25.

Lorsque l'usager quitte son véhicule et qu'auparavant il avait oublié d'allumer ses phares 3C feux de croisement pendant son trajet, ses phares 3C feux de croisement s'éteindront automatiquement lorsqu'il éteindra son interrupteur marche/arrêt 22 placé sur le boîtier de contrôle et d'information 15 du tableau de bord 6 du véhicule 1 ou par la clé de contact du véhicule par exemple.

On peut également prévoir un voyant lumineux 26, par exemple de couleur rouge, placé à droite du boîtier de contrôle 15 qui indiquera la dérive vers la droite et un voyant lumineux 27, par exemple de même couleur mais placé à gauche du boîtier de contrôle 15 qui indiquera lui la dérive vers la gauche. Une synthèse vocale 9 peut être prévue pour donner les mêmes indications. Elle peut ainsi être programmée pour annoncer les messages suivants : "danger à droite" "danger à gauche", "dérive à droite" "dérive à gauche"; etc. Ces moyens d'alarme peuvent être combinés à une alarme sonore 8 telle qu'un buzzer réglable par l'utilisateur en puissance sonore.

La programmation de la synthèse vocale 9 pourra être faite par l'utilisateur. On notera qu'elle gardera alors en mémoire, sans que cela puisse être modifié par l'utilisateur, les messages tels que "système opérationnel", "capteurs à nettoyer", "système hors service" etc., mentionnés ci-dessus.

Selon une autre variante, lorsque l'utilisateur quitte son véhicule et ferme le contact, le dispositif anti-dérive de l'invention reste alimenté et actif. Il passe cependant en mode anti-enlèvement où au lieu de déclencher une alarme dans l'habitable du véhicule, il déclenche l'alarme du véhicule ou un système radio antivol approprié. En effet, si le véhicule est enlevé, la lumière reçue par chacun des capteurs 2A et 2B va s'évanouir et va tomber en-dessous d'un seuil que pourra détecter le comparateur 140. Alors, l'alarme du véhicule ou le système radio sera enclenché.

Selon une autre variante, un dispositif de sécurité pour véhicule selon l'invention pourrait également comporter des moyens pour détecter la présence de verglas sur la chaussée et émettre ainsi une alarme à destination de l'utilisateur. De plus, en présence de verglas, l'unité de traitement 7 pourrait être rendue inactive avec, toutefois, un avertissement donné à l'utilisateur. Pour ce faire, selon ce mode, un dispositif de sécurité selon la présente invention serait tel que l'unité de traitement 7 comporterait des moyens pour détecter à partir d'un signal de niveau ambiant SNA le niveau de lumière infra-rouge émise par ladite chaussée, pour en déduire la température de ladite chaussée, et pour avertir l'utilisateur d'un risque de verglas lorsque cette température est inférieure à un seuil prédéterminé.

Bien que le dispositif anti-dérive selon l'invention a été décrit de manière à piloter une alarme, sonore, visuelle ou vocale, il est également possible d'utiliser un tel dispositif dans un système de commande de freinage assisté d'urgence pour commander un freinage du véhicule ou d'un système de commande de la colonne de direction, ou d'un système de commande d'aide à la trajectoire 28 quand la dérive ou l'écart détecté est important.

## Revendications

1. Dispositif de sécurité pour véhicule, notamment pour véhicule (1) destiné à circuler entre des bandes de marquage (4a, 4b) d'une chaussée (5), ledit dispositif étant pourvu de capteurs (2A, 2B) montés de chaque côté dudit véhicule et reliés à une unité de traitement (7) pourvue d'un système d'alarme (8, 9, 26, 27), ladite unité de traitement (7) commandant ledit système d'alarme (8, 9, 26, 27) lorsque l'un des capteurs (2A, 2B) reçoit de la lumière réfléchie sur une desdites bandes de marquage (4a, 4b) de ladite chaussée (5), **caractérisé en ce que** chaque capteur (2A, 2B) est constitué d'un premier émetteur (21A, 21B) prévu pour émettre à une première longueur d'onde, de lumière infrarouge, d'un second émetteur (22A, 22B) de lumière d'une seconde longueur d'onde différente de la première longueur d'onde, de lumière ultraviolette, et d'au moins un récepteur (23A, 23B) prévu pour recevoir les layons infrarouges et ultraviolets réfléchis.

2. Dispositif de sécurité pour véhicule selon la revendication 1, **caractérisé en ce que** ladite unité de traitement (7) comporte des moyens de validation (130A, 130B) commandant ledit système d'alarme (8, 9, 26, 27) qui sont prévus pour délivrer un signal validé (SVA, SVB) lorsque le signal issu du capteur correspondant (2A, 2B) correspond à un niveau compris entre un niveau minimal (S-) et un niveau maximal (S+), lesdits deux niveaux (S-, S+) étant délivrés par lesdits moyens de validation (130A, 130B) en prenant en compte les signaux délivrés par l'un et/ou l'autre capteurs (2A, 2B).

3. Dispositif de sécurité pour véhicule selon la revendication 1, **caractérisé en ce que** les rayonnements émis par lesdits émetteurs (21A, 21B, 22A et 22B) sont modulés en amplitude à une fréquence prédéterminée, ladite unité de traitement (7) comportant des moyens de filtrage (110A, 110B) délivrant des signaux filtrés (SFA, SFB) représentatifs des quantités de lumière respectivement émises par lesdits émetteurs (21A, 21B ; 22A et 22B) et réfléchies sur ladite chaussée (5).

4. Dispositif de sécurité pour véhicule selon une des revendications précédentes, **caractérisé en ce que** ladite unité de traitement (7) comporte des moyens de filtrage (110C) délivrant des signaux (SNA) représentatifs du rayonnement ambiant, lesdits signaux filtrés (SNA) étant utilisés par ladite unité de traitement (7) pour la commande dudit système d'alarme (8, 9, 26, 27).

5. Dispositif de sécurité pour véhicule selon une des revendications précédentes, **caractérisé en ce qu'**une table (133) délivre lesdits deux niveaux (S-, S+) et est adressée par un signal de niveau moyen (SNM) délivré par des moyens (120) sur la base des signaux délivrés par chacun desdits capteurs (2A, 2B).

6. Dispositif de sécurité pour véhicule selon une des revendications précédentes, **caractérisé en ce que** ladite unité de traitement (7) comporte des moyens de linéarisation (131A, 131B) pour linéariser la courbe de réponse desdits capteurs (2A, 2B).

7. Dispositif de sécurité pour véhicule selon une des revendications précédentes, **caractérisé en ce que** ladite unité de traitement (7) comporte un comparateur (140) prévu pour commander ledit système d'alarme sur la base des signaux délivrés par lesdits capteurs (2A, 2B), éventuellement filtrés, éventuellement validés et sur la base d'un signal de niveau moyen (SNM) lui-même délivré par des moyens (120) sur la base des signaux délivrés par chacun desdits capteurs (2A, 2B).

8. Dispositif de sécurité pour véhicule selon une des revendications précédentes, **caractérisé en ce que** ladite unité de traitement (7) comporte un comparateur (150) qui reçoit sur une entrée un signal de niveau ambiant (SNA) et sur une autre entrée un signal de référence SR et dont la sortie est reliée à une unité de commande des feux de croisement.

9. Dispositif de sécurité pour véhicule selon une des revendications précédentes, **caractérisé en ce qu'**il comporte des moyens (17, 171, 172) de détection de salissure desdits capteurs (2A, 2B).

10. Dispositif de sécurité pour véhicule selon une des revendications précédentes, **caractérisé en ce qu'**il comporte des moyens de neutralisation de son fonctionnement commandés par l'activation des clignotants dudit véhicule (1) et/ou des freins.

11. Dispositif de sécurité pour véhicule selon une des revendications précédentes, **caractérisé en ce que** la liaison entre lesdits capteurs (2A, 2B) et ladite unité de traitement (7) est une liaison sans fil, par exemple électromagnétique.

12. Dispositif de sécurité pour véhicule selon une des revendications précédentes, **caractérisé en ce qu'**il comporte des moyens de détection d'enlèvement mis en fonction lors de la fermeture du contact dudit véhicule (1) et prévus pour commander le système d'alarme dudit véhicule (1) lorsque la quantité de lumière émise par lesdits émetteurs, réfléchie au sol et reçue par lesdits capteurs (2A, 2B) change brusquement.

13. Dispositif de sécurité pour véhicule selon une des revendications précédentes, **caractérisé en ce que** ladite unité de traitement (7) comporte des moyens pour détecter à partir d'un signal de niveau ambiant (SNA) le niveau de lumière infra-rouge émise par ladite chaussée, pour en déduire la température de ladite chaussée, et pour avertir l'utilisateur d'un risque de verglas lorsque cette température est inférieure à un seuil prédéterminé.

## Claims

1. Vehicle security device particularly for a vehicle (1) designed to travel between marking strips (4a, 4b) of a highway (5) the said device being provided with captors (2A, 2B), fitted on each side of the said vehicle and linked to a treatment unit (7) provided with an alarm system (8, 9, 26, 27), the said treatment unit (7) controlling the said alarm system (8, 9, 26, 27) when one of the captors (2A, 2B) receives light reflected on one of the said marking strips (4a, 4b) of the said highway (5), **characterised by** the fact that each captor (2A, 2B) consists of a first emitter (2 1 A, 21 B) designed to emit infra-red light at a first wave length, a second emitter (22A, 22B) of light of a second wave length different from the first wave length, of ultra-violet light, and at least one receiver (23A, 23B) designed to receive infra-red and ultra-violet reflected rays.

2. Vehicle security device according to claim 1, **characterised by** the fact that the said treatment unit (7) includes validation instruments (130A, 130B) which control the said alarm system (8, 9, 26, 27), designed to issue a validated signal (SVA, SVB) when the signal coming from the corresponding captor (2A, 2B) corresponds to a level between a minimum level (S-) and a maximum level (S+), the said two levels (S-, S+) being issued by the said validation instrument (130A, 130B), taking into account the signals issued by one and/or the other of the captors (2A, 2B).

3. Vehicle security device according to claim 1, **characterised by** the fact that the radiation issued by the said emitters (21A, 21B, 22A and 22B) are modulated in amplitude to a previously determined frequency, the said treatment unit (7) including filtering instruments (110A, 110B) which issue filtered signals (SFA, SFB) which represent the quantities of light emitted by the said emitters (21A, 21B; 22A and 22B) respectively and reflected onto the said highway (5).

4. Vehicle security device according to one of the previous claims, **characterised by** the fact that the said treatment unit (7) includes filtering instruments (110C) which issues signals (SNA) representing ambient radiation, the said filtered signals (SNA) being used by the said treatment unit (7) in order to control the said alarm system (8, 9, 26,27).

5. Vehicle security device according to one of the previous claims, **characterised by** the fact that a table (133) issues the said two levels (S-, S+) and is addressed by a medium level signal (SNM) issued by instruments (120) on the basis of the signals issued by each of the said captors (2A, 2B).

6. Vehicle security device according to one of the previous claims, **characterised by** the fact that the said treatment unit (7) includes line alignment facilities (131A, 131B) in order to align the response curve of the said captors (2A, 2B).

7. Vehicle security device according to one of the previous claims, **characterised by** the fact that the said treatment unit (7) includes a differential element (140) designed to control the said alarm system on the basis of the signals issued by the said captors (2A, 2B), possibly filtered, possibly validated and on the basis of a medium level signal (SNM) itself issued by instruments (120) on the basis of the signals issued by each of the said captors (2A, 2B).

8. Vehicle security device according to one of the previous claims, **characterised by** the fact that the said treatment unit (7) includes a differential element (150) which receives on one input an ambient level signal (SNA) and one another input a reference signal SR, the output of which is linked to a traffic beam control unit.

9. Vehicle security device according to one of the previous claims, **characterised by** the fact that it includes instruments (17, 171, 172) for the detection of soiling of the said captors (2A, 2B).

10. Vehicle security device according to one of the previous claims, **characterised by** the fact that it includes instruments for the neutralisation of its functioning, which are controlled by the activation of the flashing lights of the said vehicle (1) and/or brakes.

11. Vehicle security device according to one of the previous claims, **characterised by** the fact that the link between the said captors (2A, 2B) and the said treatment unit (7) is a cordless link, for example electromagnetic.

12. Vehicle security device according to one of the previous claims, **characterised by** the fact that it includes removal detection facilities which are activated on closure of the contact of the said vehicle (1) and designed to control the alarm system of the said vehicle (1) when the quantity of light emitted by the said emitters, reflected on the ground and received by the said captors (2A, 2B) suddenly changes.

13. Vehicle security device according to one of the previous claims, **characterised by** the fact that the said treatment unit (7) includes instruments to detect the level of infra-red light emitted by the said highway from an ambient level signal (SNA), in order to calculate the temperature of the said highway and warn the user of a risk of black ice when this temperature falls below a previously determined threshold.

## Patentansprüche

1. Sicherheitsvorrichtung für Fahrzeug, insbesondere für ein Fahrzeug (1), das dazu bestimmt ist, zwischen Markierungsstreifen (4a, 4b) einer Fahrbahn (5) zu fahren, wobei die Vorrichtung mit Fühlern (2A, 2B) versehen ist, die auf jeder Seite des Fahrzeugs montiert und an eine Verarbeitungseinheit (7) angeschlossen sind, die mit einer Alarmanlage (8, 9, 26, 27) versehen ist, wobei die Verarbeitungseinheit (7) das Alarmsystem (8, 9, 26, 27) steuert, wenn einer der Fühler (2A, 2B) Licht empfängt, das auf einem der Markierungsbänder (4a, 4b) der Fahrbahn (5) reflektiert wird, **dadurch gekennzeichnet, dass** jeder Fühler (2A, 2B) aus einem ersten Sender (21A, 21B) besteht, der zum Senden einer ersten Wellenlänge mit Infrarotlicht versehen ist, aus einem zweiten Sender (22A, 22B) mit Licht einer zweiten Wellenlänge, die anders ist als die erste Wellenlänge, mit Ultraviolettlicht, und mindestens einem Empfänger (23A, 23B), der vorgesehen ist, um die reflektierten Infrarot- und Ultraviolettstrahlen zu empfangen.

2. Sicherheitsvorrichtung für Fahrzeug nach Anspruch 1, **dadurch gekennzeichnet, dass** die Verarbeitungseinheit (7) Bestätigungsmittel (130A, 130B) umfasst, die die Alarmanlage (8, 9, 26, 27) steuern, die vorgesehen sind, um ein bestätigtes Signal (SVA, SVB) zu liefern, wenn das aus dem entsprechenden Fühler (2A, 2B) stammende Signal einem Niveau entspricht, das zwischen einem Mindestniveau (S-) und einem Höchstniveau (S+) liegt, wobei die zwei Niveaus (S-, S+) von den Bestätigungsmitteln (130A, 130B) geliefert werden, wobei die Signale berücksichtigt werden, die von dem einen und/oder dem anderen Fühler (2A, 2B) geliefert werden.

3. Sicherheitsvorrichtung für Fahrzeug nach Anspruch 1, **dadurch gekennzeichnet, dass** die von den Sendern (21A, 21B, 22A und 22B) gesendeten Strahlungen auf eine vorausbestimmte Frequenz amplitudenmoduliert sind, wobei die Verarbeitungseinheit (7) Filtermittel (110A, 110B) umfasst, die gefilterte Signale (SFA, SFB) liefern, die für Lichtmengen repräsentativ sind, die jeweils von den Sendern (21A, 21B; 22A und 22B) gesendet und auf der Fahrbahn (5) reflektiert werden.

4. Sicherheitsvorrichtung für Fahrzeug nach einem der vorhergehenden Ansprüche, **dadurch gekennzeichnet, dass** die Verarbeitungseinheit (7) Filtermittel (110C) umfasst, die Signale (SNA) liefern, die für die Umgebungsstrahlung repräsentativ sind, während die gefilterten Signale (SNA) von der Verarbeitungseinheit (7) zum Steuern der Alarmanlage (8, 9, 26, 27) verwendet werden.

5. Sicherheitsvorrichtung für Fahrzeug nach einem der vorhergehenden Ansprüche, **dadurch gekennzeichnet, dass** eine Tabelle (133) die zwei Niveaus (S-, S+) liefert und von einem Signal mittleren Niveaus (SNM) adressiert wird, das von Mitteln (120) auf der Basis der von jedem der Fühler (2A, 2B) gelieferten Signale geliefert wird.

6. Sicherheitsvorrichtung für Fahrzeug nach einem der vorhergehenden Ansprüche, **dadurch gekennzeichnet, dass** die Verarbeitungseinheit (7) Linearisierungsmittel (131A, 131B) umfasst, um die Antwortkurve der Fühler (2A, 2B) zu linearisieren.

7. Sicherheitsvorrichtung für Fahrzeug nach einem der vorhergehenden Ansprüche, **dadurch gekennzeichnet, dass** die Verarbeitungseinheit (7) einen Komparator (140) umfasst, der dazu vorgesehen ist, die Alarmanlage auf der Basis der Signale, die von den Fühlern (2A, 2B) geliefert werden, eventuell gefiltert, eventuell bestätigt und auf der Basis eines Signals mittleren Niveaus (SNM), das selbst von Mitteln (120) auf der Basis der von jedem der Fühler (2A, 2B) gelieferten Signale geliefert wird, zu steuern.

8. Sicherheitsvorrichtung für Fahrzeug nach einem der vorhergehenden Ansprüche, **dadurch gekennzeichnet, dass** die Verarbeitungseinheit (7) einen Komparator (150) umfasst, der auf einem Eingang ein Signal mit Umgebungsniveau (SNA) und auf einem anderen Eingang ein Referenzsignal (SR) empfängt, und dessen Ausgang mit einer Steuereinheit der Abblendlichter verbunden ist.

9. Sicherheitsvorrichtung für Fahrzeug nach einem der vorhergehenden Ansprüche, **dadurch gekennzeichnet, dass** sie Mittel (17, 171, 172) zum Erfassen von Schmutz der Fühler (2A, 2B) umfasst.

10. Sicherheitsvorrichtung für Fahrzeug nach einem der vorhergehenden Ansprüche, **dadurch gekennzeichnet, dass** sie Mittel zum Neutralisieren ihres Funktionierens umfasst, die durch das Betätigen der Blinker des Fahrzeugs (1) und/oder der Bremsen gesteuert werden.

11. Sicherheitsvorrichtung für Fahrzeug nach einem der vorhergehenden Ansprüche, **dadurch gekennzeichnet, dass** die Verbindung zwischen den Fühlern (2A, 2B) und der Verarbeitungseinheit (7) eine drahtlose Verbindung, zum Beispiel eine elektromagnetische Verbindung ist.

12. Sicherheitsvorrichtung für Fahrzeug nach einem der vorhergehenden Ansprüche, **dadurch gekennzeichnet, dass** sie Mittel zum Erfassen des Entfernens umfasst, die beim Schließen der Zündung des Fahrzeugs (1) in Betrieb genommen werden, und die vorgesehen sind, um die Alarmanlage des Fahrzeugs (1) zu steuern, wenn sich die Menge an Licht, die von den Sendern gesendet wird, die am Boden reflektiert und von den Fühlern (2A, 2B) empfangen wird, plötzlich ändert.

13. Sicherheitsvorrichtung für Fahrzeug nach einem der vorhergehenden Ansprüche, **dadurch gekennzeichnet, dass** die Verarbeitungseinheit (7) Mittel umfasst, um ausgehend von einem Signal mit Umgebungsniveau (SNA) das Infrarotlichtniveau zu erfassen, das von der Fahrbahn gesendet wird, um daraus die Temperatur der Fahrbahn abzuleiten, und um den Benutzer über eine Glatteisgefahr zu warnen, wenn diese Temperatur kleiner ist als ein vorausbestimmter Schwellenwert.
